Europäisches Patentamt

European Patent Office

Office européen des brevets

(19)

(11) **EP 1 005 285 B1**

(12) **FASCICULE DE BREVET EUROPEEN**

(45) Date de publication et mention
de la délivrance du brevet:
**07.11.2001 Bulletin 2001/45**

(51) Int Cl.⁷: **A47L 13/16**, D04H 1/68,
C08L 1/08, A47K 7/02

(21) Numéro de dépôt: **98942754.7**

(86) Numéro de dépôt international:
**PCT/FR98/01821**

(22) Date de dépôt: **19.08.1998**

(87) Numéro de publication internationale:
**WO 99/09877 (04.03.1999 Gazette 1999/09)**

(54) **MATIERE SPONGIEUSE, SON PROCEDE DE FABRICATION ET SES APPLICATIONS**

SCHWAMMARTIGES MATERIAL, DESSEN VERFAHREN ZUR HERSTELLUNG UND ANWENDUNGEN

POROUS MATERIAL, METHOD FOR MAKING SAME AND APPLICATIONS

(84) Etats contractants désignés:
**AT BE CH CY DE DK ES FI FR GB GR IE IT LI LU MC NL PT SE**

(30) Priorité: **21.08.1997 FR 9710532**

(43) Date de publication de la demande:
**07.06.2000 Bulletin 2000/23**

(73) Titulaire: **HUTCHINSON S.A.**
**75008 Paris (FR)**

(72) Inventeurs:
• **ARGY, Gilles**
**F-78940 La Queue les Yvelines (FR)**

• **CHEYMOL, André**
**F-86220 Dangé Saint Romain (FR)**
• **GAROIS, Nicolas**
**F-45200 Amilly (FR)**
• **TERRISSE, Jean**
**F-67100 Strasbourg (FR)**

(74) Mandataire: **Vialle-Presles, Marie José et al**
**Cabinet Orès,**
**6, Avenue de Messine**
**75008 Paris (FR)**

(56) Documents cités:
**EP-A- 0 418 151**    **FR-A- 2 748 277**
**GB-A- 581 711**    **US-A- 4 104 435**
**US-A- 4 559 243**    **US-A- 4 940 631**

EP 1 005 285 B1

## Description

La présente Invention se rapporte à une matière spongieuse, à son procédé de préparation ainsi qu'à ses applications, notamment pour la fabrication d'éponges et d'articles de ménage comprenant un élément spongieux tels que balais et raclettes pour le nettoyage des surfaces.

Dans le domaine de l'entretien ménager, on utilise principalement des éponges végétales, à base de cellulose régénérée, et des éponges synthétiques qui sont le plus souvent constituées par des mousses de polyuréthanne à cellules ouvertes.

Si les éponges à base de cellulose régénérée présentent, d'une manière générale, des qualités très satisfaisantes, tant en termes de capacités d'absorption et de rétention d'eau, d'aptitude à essuyer, de souplesse, de résilience, de résistance mécanique et de résistance à l'eau, aux détergents et à la chaleur, leur fabrication pose, par contre, des problèmes majeurs.

En effet, ces éponges sont fabriquées par des procédés qui consistent à transformer, dans un premier temps, de la cellulose en une pâte de viscose, transformation qui est réalisée par sodation de la cellulose, dissolution de l'alcalicellulose ainsi formée par du sulfure de carbone et traitement du xanthate de cellulose résultant par de la lessive de soude. Puis, après incorporation dans la pâte de viscose ainsi obtenue, de fibres de renfort (chanvre, lin, coton, ...), de colorants et de cristaux de sulfate de soude, et mise en forme par moulage ou boudinage, l'ensemble est soumis à un chauffage qui permet de solidifier la viscose, de la régénérer en cellulose par évaporation du sulfure de carbone et de faire fondre les cristaux de sulfate de soude qui, en s'éliminant, laissent à leur place une multitude d'alvéoles.

Aussi, la mise en oeuvre de ces procédés à une échelle industrielle, compte tenu de la nature de la nature très corrosive et toxique des produits qu'ils utilisent, nécessite des installations très spécifiques et très coûteuses, tant en termes d'investissements que de coûts de fonctionnement, est hautement polluante en dépit des équipements de dépollution que ces installations comportent et des mesures qui sont prises pour limiter les nuisances sur l'environnement et ce, pour des rendements de production relativement faibles.

Les éponges en mousses de polyuréthanne sont obtenues par des procédés de fabrication nettement moins contraignants, qui sont basés sur une réaction de condensation entre un polyol et un polyisocyanate dans une phase aqueuse, mais elles présentent l'inconvénient d'avoir un caractère relativement hydrophobe qui se traduit par des propriétés de mouillabilité, de rétention d'eau et d'essuyage très insuffisantes et ce, en dépit des nombreux traitements qui ont été proposés dans l'art antérieur pour rendre les mousses de polyuréthanne plus hydrophiles.

Il a, par ailleurs, été proposé dans US-A-4,559,243, de réaliser des structures spongieuses se présentant sous la forme de feuilles de quelques mm d'épaisseur, en déposant une mousse constituée par un mélange d'un latex et de fibres hydrophiles du type fibres de cellulose, de viscose ou encore d'alcool polyvinylique sur un support tel qu'un tissu, un non tissé ou une feuille plastique, puis en soumettant l'ensemble à des opérations de chauffage de manière à obtenir la coagulation de la mousse et sa stabilisation en une structure à cellules ouvertes par séchage et réticulation. Si la fabrication de ces structures spongieuses est dépourvue, comme celle des éponges en mousses de polyuréthanne, des inconvénients des procédés de fabrication des éponges végétales, il s'avère toutefois que ces structures présentent un faible pouvoir absorbant qui limite considérablement leur intérêt.

La Demanderesse s'est, en conséquence, fixé pour but de fournir des éponges qui présentent toutes les qualités requises pour un usage ménager et, notamment, une capacité à absorber un grand volume d'eau et à retenir l'eau ainsi absorbée aussi longtemps que l'on ne cherche pas à l'éliminer de manière active, une aptitude à libérer toutefois cette eau sous l'effet d'un essorage manuel, et un pouvoir d'essuyage élevé, et dont la fabrication soit simple à mettre en oeuvre, ne nécessite pas d'investissements industriels importants, n'utilise ni produits corrosifs, ni produits toxiques, soit dénuée de retentissement sur l'environnement et se caractérise par des rendements de production économiquement intéressants.

Ce but est atteint, selon la présente Invention, par une matière spongieuse comprenant un mélange de fibres de cellulose et d'au moins un élastomère, caractérisée en ce qu'elle présente :

- une structure alvéolaire formée par des alvéoles dont la taille est comprise entre 0,01 et 10 mm,
- une densité comprise entre 0,03 et 0,1,
- une capacité d'absorption d'eau au moins égale à 750%, et
- une capacité de rétention d'eau après un essorage manuel inférieure à 100%.

Au sens de la présente Invention, on entend par *"capacité d'absorption d'eau",* le rapport exprimé en pourcentage entre la masse d'eau susceptible d'être absorbée par la matière spongieuse lorsque celle-ci est entièrement immergée dans un volume d'eau et la masse sèche de cette matière spongieuse, et par *"capacité de rétention d'eau après un essorage manuel",* le rapport, également exprimé en pourcentage, entre la masse d'eau retenue dans la matière spongieuse après que celle-ci ait été essorée manuellement et la masse sèche de ladite matière spongieuse.

Les fibres de cellulose utiles selon l'Invention sont toutes les fibres de cellulose naturelle telles que les fibres cellulosiques du bois ou fibres papetières (fibres de résineux ou de feuillus, blanchies ou non), les fibres de coton, de lin, de chanvre, de jute, de sisal ou encore les fibres régénérées de chiffons.

Elles peuvent, par ailleurs, être des fibres longues (c'est-à-dire des fibres mesurant plus d'1 cm de long), des fibres courtes (de longueur inférieure à 3 mm) ou des fibres de longueur intermédiaire (entre 3 mm et 1 cm de long) ou encore être composées d'un mélange de fibres de différentes longueurs. Ainsi, par exemple, d'excellents résultats ont été obtenus en utilisant soit des fibres cellulosiques longues, préparées par découpage de feuilles de linters de coton en lambeaux de quelques cm de côté, seules ou en association avec des fibres cellulosiques courtes telles que celles commercialisées sous le nom commercial ARBOCELL® par la Société RETTENMAIER & SOHNE et qui mesurent environ 900 μm de longueur, soit des fibres cellulosiques de longueur intermédiaire, également préparées par découpage de feuilles de linters de coton, mais en lambeaux de longueur sensiblement comprise entre 8 mm et 1 cm.

Par ailleurs, quelle que soit leur longueur, les fibres cellulosiques utilisables dans l'Invention peuvent avantageusement avoir été soumises préalablement à un traitement propre à favoriser leur enchevêtrement au sein de l'élastomère et, partant, leur adhésion vis-à-vis de cet élastomère. Un tel traitement peut consister, par exemple, en une fibrillation, c'est-à-dire un brassage mécanique ayant pour effet de libérer des fibrilles à la surface des fibres leur permettant de s'accrocher les unes aux autres, ou en une exposition aux ultraviolets qui, en induisant la formation de sites réactifs à la surface des fibres, autorise un accrochage chimique de ces fibres. A titre d'exemple de fibres cellulosiques ayant subi une fibrillation commercialement disponibles, on peut citer les fibres commercialisées sous le nom commercial LYOCELL® par la Société COURTAULDS CHEMICALS.

L'élastomère utile selon l'Invention peut, quant à lui, être choisi parmi de très nombreux élastomères pour autant que ces élastomères soient compatibles avec la cellulose et ne présentent donc pas un caractère hydrophobe prononcé.

Ainsi, l'élastomère sera avantageusement sélectionné parmi les caoutchoucs polybutadiène, les copolymères de butadiène-styrène, les copolymères butadiène-acrylonitrile (ou caoutchoucs nitrile), les copolymères et terpolymères d'éthylène et de propylène, les copolymères séquencés styrène-butadiène ou styrèneisoprène, les copolymères séquencés styrène-éthylène-butylène-styrène, les élastomères thermoplastiques dérivés des polyoléfines (tels que le SANTOPRENE® de la Société AES ou le VEGAPRENE® de la Société HUTCHINSON), les copolymères d'octène et d'éthylène (tels que ceux commercialisés par la Société DU PONT DOW sous le nom commercial ENGAGE®), les copolymères d'éthylacrylate et autres acrylates comme les terpolymères d'acrylate, d'éthylène et d'acide acrylique (tels que ceux commercialisés par les Sociétés DU PONT DE NEMOURS et EXXON, respectivement sous les références VAMAC® et ATX® 325) ou les terpolymères d'acrylate, d'acrylonitrile et de styrène (comme le SUNIGUM® de la Société GOODYEAR), les polychloroprènes, les polyéthylènes chlorés, et leurs mélanges.

Par ailleurs, pour ce qui concerne les élastomères polyoléfiniques précités et, notamment, les caoutchoucs polybutadiène, butadiène-styrène et butadiène-acrylonitrile, l'utilisation des dérivés carboxylés de ces élastomères s'est révélée particulièrement avantageuse en raison de leur aptitude à former, par pontages ioniques entre les fonctions carboxyle en présence de métaux divalents ou trivalents tels que le zinc, le calcium ou l'aluminium, un réseau contribuant à conférer à la matière spongieuse une cohésion satisfaisante.

Conformément à l'Invention, la matière spongieuse peut comprendre, en plus des fibres de cellulose, des fibres synthétiques propres à jouer un rôle de renfort au sein de l'élastomère et permettant soit d'augmenter encore la cohésion de la matière spongieuse et, partant, sa résistance mécanique lorsque cela s'avère nécessaire, soit de réduire la quantité d'élastomère nécessaire à l'obtention d'une cohésion appropriée et d'abaisser ainsi le prix de revient de ladite matière.

A titre d'exemples de fibres synthétiques susceptibles de convenir, on peut citer les fibres de polyamide, les fibres de polyester, les fibres de polyéthylène, les fibres de polypropylène, les fibres de polyacrylonitrile et les fibres d'alcool polyvinylique, étant entendu que, quelle que soit la nature chimique des fibres choisies, on utilisera de préférence des fibres présentant à la fois suffisamment de ténacité pour qu'elles puissent jouer leur rôle de fibres de renfort, et suffisamment de souplesse pour éviter qu'elles ne rigidifient la matière spongieuse finalement obtenue. En tout état de cause, lorsque de telles fibres de renfort sont présentes dans la matière spongieuse, elles représentent avantageusement au plus 20% et, de préférence, entre 5 et 15% en masse de la masse totale des fibres présentes dans cette matière.

La matière spongieuse conforme à l'Invention peut, également, avantageusement comprendre un ou plusieurs polymères propres à servir d'agents d'interface entre les fibres cellulosiques (et, éventuellement, les fibres synthétiques) et l'élastomère, et à favoriser ainsi leur adhésion mutuelle. Pour ce faire, ce ou ces polymères auront, de préférence, une nature plus hydrophile que celle de l'élastomère.

A titre d'exemples de polymères susceptibles d'être utilisés, on peut citer les alcools polyvinyliques (ELVANOL® de la Société DU PONT DE NEMOURS, GOHSENOL® de la Société NIPPON GOSHEI, ...), les résines mélamine-formaldéhyde (CYREZ 963 E de la Société CYTEC, RESIMENE s 3521 de la Société MONSANTO, ...), les colles vinyliques ou colles à bois ou encore les polyuréthannes. Lorsque de tels polymères sont présents dans la matière spongieuse, ils peuvent représenter jusqu'à 35 parties en masse pour 100 parties en masse de l'élastomère.

La matière spongieuse peut, de plus, comprendre un ou plusieurs adjuvants convenablement choisis, en fonction des propriétés que l'on souhaite lui donner, parmi les adjuvants classiquement employés dans l'industrie des polymères. Elle peut, ainsi, contenir des charges claires du type silices, carbonates, argiles, craies ou kaolins, des plastifiants, des colorants ou pigments, des stabilisants tels que des antioxydants, des agents anti-ultraviolets, des antiozonants, des fongicides, des bactéricides, des parfums microencapsulés ainsi que des agents de mise en oeuvre propres à faciliter sa fabrication tels que des agents épaississants, des agents tensioactifs, des agents de coagulation du latex ou encore des agents de réticulation, comme il sera explicité ci-après.

Selon une première disposition préférée de la matière spongieuse conforme à l'Invention, le rapport entre la masse totale des fibres (fibres de cellulose et, éventuellement, fibres synthétiques) et la masse d'élastomère présentes dans cette matière est compris entre 2 et 0,2 et, de préférence, entre 1,5 et 0,3.

Conformément à l'Invention, la matière spongieuse peut présenter des alvéoles présentant toutes la même taille ou sensiblement la même taille. Toutefois, on préfère que la taille de ces alvéoles soit hétérogène et se répartisse selon une large distribution de manière à former un réseau de microcavités et de macrocavités au sein de la matière spongieuse, apte à favoriser la capacité d'absorption d'eau de cette matière ainsi que sa capacité de rétention d'eau avant essorage (de manière à ce que l'eau ne s'égoutte pas sous l'effet de la gravité), et à lui conférer, de plus, la souplesse nécessaire pour rendre son essorage facile.

Selon une autre disposition préférée de la matière spongieuse conforme à l'Invention, celle-ci présente une densité comprise entre 0,03 et 0,08 et une capacité d'absorption d'eau comprise entre 900 et 1200%.

Selon encore une autre disposition avantageuse de la matière spongieuse conforme à l'Invention, elle présente, de plus, une résistance à la traction au moins égale à 0,1 MPa.

Ainsi, la matière spongieuse conforme à l'Invention présente de nombreux avantages : outre d'avoir un haut pouvoir absorbant, elle est capable de retenir l'eau absorbée tant que l'on ne cherche pas à l'éliminer de manière active, tout en la libérant sous l'effet d'un essorage manuel. Elle présente, par ailleurs, un pouvoir d'essuyage élevé. Elle possède, de plus, une souplesse qui rend sa manipulation aisée ainsi qu'une résilience qui lui permet de reprendre sa forme initiale après chaque essorage. Elle présente, en outre, des propriétés mécaniques et, notamment, de résistance à la contrainte extrêmement satisfaisantes.

La matière spongieuse conforme à l'Invention est, de ce fait, particulièrement bien adaptée à entrer dans la constitution d'éponges et, notamment, d'éponges destinées à la toilette ou au nettoyage de surfaces. Pour ce faire, elle présente une épaisseur comprise, de préférence, entre 1 et 15 cm, de manière particulièrement préférée, entre 1,5 et 10 cm et de manière encore plus préférée, entre 2 et 5 cm pour faciliter la prise en main de ces éponges.

La présente Invention a, également, pour objet un procédé de préparation d'une matière spongieuse telle que précédemment définie, qui est caractérisé en ce qu'il comprend :

a) la préparation d'un mélange comprenant au moins des fibres de cellulose et un élastomère,
b) la mise en forme de ce mélange,
c) l'incorporation dans le mélange, au cours de l'étape a) ou de l'étape b), d'un agent apte à conférer, éventuellement par un changement d'état physique, une structure alvéolaire au produit obtenu à l'étape b) et, si nécessaire,
d) l'application au produit obtenu à l'étape b) d'un traitement apte à assurer le changement d'état physique dudit agent et/ou la réticulation dudit produit.

Selon un premier mode de mise en oeuvre préféré du procédé conforme à l'Invention, l'élastomère est un élastomère réticulable qui est utilisé sous la forme d'un latex, et le procédé comprend :

a) la dispersion des fibres de cellulose dans une phase aqueuse, le mélange de cette dispersion et du latex en présence d'un système de réticulation convenablement choisi, et l'incorporation de morceaux de glace dans le mélange résultant,
b) la mise en forme de ce mélange par congélation, et
c) le chauffage du produit résultant de la congélation pour obtenir la fusion des morceaux de glace qu'il contient, son séchage et sa réticulation.

Ainsi, dans ce premier mode de mise en oeuvre préféré du procédé conforme à l'Invention, l'agent apte à conférer une structure alvéolaire à la matière spongieuse est constitué par des morceaux de glace qui, en étant incorporés dans le mélange dispersion de fibres de cellulose/latex préalablement à sa congélation, vont former au cours de cette congélation et de la coagulation de ce mélange qui en résulte, les emplacements des alvéoles par la place qu'ils occupent au sein dudit mélange. Le chauffage ultérieur du produit issu de la congélation, en assurant simultanément la fusion des morceaux de glace qu'il contient, la réticulation de ce produit et son séchage, permet d'obtenir la formation d'une structure alvéolaire.

De fait, la forme et la taille des morceaux de glace utilisés déterminent celles des alvéoles de la matière spongieuse. Aussi, ces morceaux de glace sont choisis en fonction de la structure alvéolaire que l'on souhaite donner à la matière spongieuse. Il est ainsi possible d'utiliser, selon le cas, des morceaux de glace de forme irrégulière tels que de la glace pilée, obtenue par exemple par broyage ou concassage, ou, au contraire, des morceaux de glace de forme régulière tels que des glaçons sphériques ou ovoïdes, obtenus par moulage, granulation ou tout autre procédé, ou encore des mélanges de tels morceaux. Par ailleurs, bien que l'on préfère généralement utiliser un mélange de morceaux de glace présentant des tailles différentes pour obtenir une matière spongieuse à large distribution de tailles d'alvéoles, on peut également utiliser des morceaux de glace ayant une taille identique ou sensiblement identique, si l'on désire que les alvéoles de la matière spongieuse soient sensiblement toutes de la même taille.

Selon une disposition avantageuse de ce premier mode de mise en oeuvre préféré, les morceaux de glace, qui sont incorporés dans le mélange dispersion de fibres de cellulose/latex, sont composés d'un mélange de morceaux de glace sensiblement sphériques et de diamètres compris entre 0,1 et 10 mm.

Le rapport entre la masse de matière sèche présente dans le mélange dispersion de fibres de cellulose/latex, et la masse des morceaux de glace incorporés dans ce mélange, détermine, quant à lui, la densité finale de la matière spongieuse. Il est donc avantageusement choisi en fonction de la densité que l'on souhaite conférer à la matière spongieuse.

Ainsi, à titre d'exemple, d'excellents résultats ont été obtenus en préparant, conformément à ce premier mode de mise en oeuvre préféré, des matières spongieuses présentant un rapport entre la masse sèche des fibres de cellulose et celle de l'élastomère proche de 1 :

- en mélangeant une dispersion de fibres de cellulose présentant une concentration en fibres d'environ 10% avec un latex contenant une teneur en élastomère sec d'environ 42% dans des proportions permettant d'obtenir, en tenant compte des adjuvants qui leur sont ajoutés (système de réticulation et, éventuellement, agents de coagulation, charges, colorants, ...), un rapport entre la masse de matière sèche et la masse d'eau présentes dans ce mélange de l'ordre de 0,2 avant l'incorporation des morceaux de glace, et

- en incorporant dans ledit mélange, une quantité de morceaux de glace propre à abaisser le rapport entre la masse de matière sèche et la masse d'eau (y compris l'eau représentée par les morceaux de glace) présentes dans ce mélange à une valeur d'environ 0,1.

La dispersion des fibres de cellulose dans la phase aqueuse peut être réalisée en introduisant ces fibres dans un mélangeur préalablement rempli d'un volume d'eau convenablement choisi et sous une agitation mécanique appropriée (qui, d'une manière générale, sera d'autant plus vigoureuse que les fibres de cellulose seront plus longues), et en maintenant cette agitation jusqu'à l'obtention d'une pâte homogène. Quel que soit le type de mélangeur (turbodisperseur, mélangeur planétaire, agitateur muni d'une pâle défloculeuse, ...) dans lequel on effectue cette dispersion, il est avantageux que ce mélangeur soit équipé d'un système permettant d'éviter ou, à tout le moins, de limiter l'échauffement de la dispersion, comme par exemple un système de réfrigération des parois.

Selon une autre disposition avantageuse de ce premier mode de mise en oeuvre préféré, la congélation du mélange dispersion de fibres de cellulose/latex après incorporation des morceaux de glace, est réalisée en plaçant ce mélange à une température comprise entre -10 et -40°C et en le maintenant à cette température pendant une durée comprise entre 2 et 5 heures selon son épaisseur. Il est toutefois possible d'utiliser des températures plus basses, par exemple de l'ordre de -50 à -60°C.

Le chauffage du produit issu de la congélation est, quant à lui, réalisé en soumettant ledit produit, de préférence, à une température comprise entre 100 et 200°C, au moyen d'un dispositif de chauffage tel qu'un tunnel à micro-ondes ou à infrarouges, un tube de vapeur, un autoclave en vapeur vive ou à air chaud, une étuve à air ventilé ou à air chaud, un four à haute-fréquence, ou encore en utilisant successivement plusieurs de ces dispositifs.

Il convient de remarquer que, dans le cas où l'on souhaite que la matière spongieuse contienne, outre des fibres de cellulose, des fibres synthétiques, il est tout à fait possible, conformément à ce premier mode de mise en oeuvre préféré, d'ajouter ces fibres synthétiques aux fibres de cellulose, par exemple en les dispersant conjointement avec ces dernières dans la phase aqueuse.

De manière similaire, si l'on désire utiliser un ou plusieurs polymères aptes à servir d'agents d'interface entre les fibres et l'élastomère et/ou un ou plusieurs adjuvants et, notamment, un agent propre à favoriser la coagulation du latex au cours de l'étape de congélation (chlorure de calcium, chlorure d'ammonium, nitrate de calcium, ...), ceux-ci peuvent être incorporés soit dans la dispersion de fibres de cellulose, soit dans le latex, soit encore dans leur mélange tel qu'obtenu à l'étape a).

Selon un deuxième mode de mise en oeuvre préféré du procédé conforme à l'Invention, l'élastomère est un élastomère réticulable qui est utilisé sous la forme d'un latex, et le procédé comprend:

a) la dispersion des fibres de cellulose dans une phase aqueuse, le mélange de cette dispersion et du latex en présence d'un système de réticulation convenablement choisi, et la transformation du mélange résultant en une mousse,

b) la mise en forme de cette mousse par coagulation, et

c) le chauffage du produit résultant de cette coagulation pour obtenir sa réticulation et son séchage.

Ainsi, dans ce deuxième mode de mise en oeuvre préféré du procédé conforme à l'Invention, l'agent apte à conférer une structure alvéolaire à la matière spongieuse est constitué par un gaz qui, en étant introduit dans le mélange dispersion de fibres de cellulose/latex, va générer au sein de ce mélange une multitude de bulles et le transformer en une mousse. La coagulation ultérieure de cette mousse, en induisant sa solidification tout en assurant un maintien des bulles qu'elle renferme, aboutit à l'obtention d'une structure alvéolaire, interconnectée et se caractérisant avantageusement par une large distribution de la taille des alvéoles.

De manière préférée, le gaz est de l'air et il est introduit dans le mélange dispersion de fibres de cellulose/latex en soumettant ce mélange pendant quelques minutes à une agitation mécanique vigoureuse, avantageusement comprise entre 800 et 1200 tr/min, et ce, par exemple dans un turbodisperseur qui, là également, peut être muni d'un système propre à éviter ou, à tout le moins, limiter l'échauffement du mélange tel qu'un système de réfrigération des parois. Il est toutefois possible d'utiliser un gaz autre que l'air, comme par exemple un gaz inerte, pour réaliser cette opération de moussage.

Dans la mesure où la vitesse à laquelle est effectuée l'agitation mécanique du mélange dispersion de fibres de cellulose/latex, et la durée de cette agitation règlent la densité et la taille des alvéoles de la matière spongieuse finalement obtenue - à savoir que ces dernières seront d'autant plus faibles que l'agitation aura été plus vigoureuse et plus longue -, la vitesse et la durée de cette agitation seront donc avantageusement choisies en fonction des propriétés que l'on souhaite conférer à la matière spongieuse.

Selon une première variante de ce deuxième mode de mise en oeuvre préféré, la coagulation de la mousse est obtenue par sa congélation. Celle-ci est avantageusement réalisée en plaçant la mousse à une température comprise entre -10 et -30°C et en la maintenant à cette température pendant une durée comprise entre 2 et 5 heures selon son épaisseur.

Selon une autre variante de ce deuxième mode de mise en oeuvre préféré, la coagulation de la mousse est obtenue par une thermosensibilisation du latex qu'elle renferme. Une telle thermosensibilisation nécessite la présence dans cette mousse d'un agent coagulant apte à réagir sous l'effet d'une augmentation de la température de la mousse - c'est-à-dire en pratique d'un chauffage de cette dernière -, tel qu'un organosiloxane. Cet agent coagulant est ajouté au latex dans des proportions comprises, de préférence, entre 0,05 et 0,5 part en masse pour 100 parts de masse sèche de l'élastomère présent dans ce latex.

Avantageusement, la coagulation par thermosensibilisation du latex est réalisée en plaçant la mousse à une température au moins égale à 25°C et, de préférence supérieure à 35°C, par exemple dans un tunnel à micro-ondes ou à infrarouges, un tube de vapeur, un autoclave en vapeur vive ou à air chaud, une étuve à air ventilé ou à air chaud, un four à haute fréquence, et en maintenant cette mousse à cette température suffisamment de temps pour obtenir sa gélification, soit en pratique pendant une durée comprise entre 1 et 5 heures selon l'épaisseur de la mousse, la nature du latex et de l'agent coagulant et la quantité d'agent coagulant utilisée.

Conformément à l'Invention, la coagulation, qu'elle soit réalisée par congélation ou par thermosensibilisation, est suivie d'une opération de chauffage du produit résultant de cette coagulation, laquelle est destinée dans le premier cas, à décongeler, sécher et à obtenir la réticulation de ce produit alors que dans le second cas, son action se limite à le sécher et à le réticuler. Cette opération de chauffage est réalisée en soumettant ledit produit, de préférence, à une température comprise entre 100 et 200°C - en utilisant là également un dispositif de chauffage du type tunnel à micro-ondes ou à infrarouges, tube de vapeur, autoclave en vapeur vive ou à air chaud, étuve à air ventilé ou à air chaud, four à haute fréquence, ou successivement plusieurs de ces dispositifs -, et en le maintenant à cette température pendant une durée comprise entre 1 et 5 heures selon les cas.

En pratique, dans le cas où la coagulation de la mousse est obtenue par thermosensibilisation du latex, il est possible et même avantageux de réaliser cette coagulation ainsi que le séchage et la réticulation du produit résultant en une seule étape et dans un seul dispositif de chauffage, en plaçant directement la mousse dans ce dispositif préchauffé à la température choisie pour le séchage et la réticulation, la coagulation s'effectuant alors au cours de la montée en température de la mousse.

Conformément à ce deuxième mode de mise en oeuvre préféré du procédé conforme à l'Invention, celui-ci comprend, de plus, l'incorporation dans la dispersion de fibres de cellulose, le latex ou leur mélange selon le cas :

- d'un agent tensioactif propre à favoriser la transformation du mélange dispersion de fibres de cellulose/latex, en une mousse ; à titre d'exemples d'agents tensioactifs qui se sont révélés particulièrement bien convenir à la mise en oeuvre du procédé conforme à l'Invention, on peut citer les sulfosuccinates tels que ceux commercialisés par la Société CYTEC sous le nom commercial AEROSOL® ; lorsqu'un tel agent tensioactif est utilisé, il est, de préférence, ajouté au latex avant que ce dernier ne soit mélangé avec la dispersion de fibres cellulosiques et ce, selon des proportions comprises entre 2 et 6 parts en masse pour 100 parts de masse sèche de l'élastomère présente dans ce latex ;

- d'un agent propre à stabiliser la mousse, une fois celle-ci formée ; un tel agent peut, notamment, être un agent épaississant tel qu'un éther ou un ester de cellulose (hydroxyéthylcellulose, hydroxypropyl méthylcellulose, ...); par ailleurs, cet agent est avantageusement incorporé dans la dispersion de fibres de cellulose selon des proportions comprises entre 0,5 et 4 parts en masse de la masse sèche de l'élastomère présente dans le latex ;
- d'un agent propre à favoriser la coagulation de la mousse lorsque cette coagulation est obtenue par congélation, du type chlorure de calcium, chlorure d'ammonium ou nitrate de calcium.

A titre d'exemple, d'excellents résultats ont été obtenus en préparant, conformément à ce deuxième mode de mise en oeuvre préféré, des matières spongieuses présentant un rapport entre la masse sèche des fibres de cellulose et la masse sèche de l'élastomère proche de 0,5, en mélangeant une dispersion de fibres de cellulose présentant une concentration en fibres comprise entre 8 et 15% avec un latex contenant une teneur en élastomère sec d'environ 55% dans des proportions permettant d'obtenir, en tenant compte des adjuvants qui leur sont ajoutés (système de réticulation et, éventuellement, charges, agents tensioactifs, agents épaississants, agents de coagulation, ...), un rapport entre la masse de matière sèche et la masse d'eau présentes dans ce mélange de l'ordre de 0,3.

Il va de soi que, dans ce deuxième mode de mise en oeuvre préféré du procédé conforme à l'Invention, la dispersion des fibres de cellulose dans la phase aqueuse peut être réalisée dans les mêmes conditions que celles précédemment décrites pour le premier mode de mise en oeuvre préféré.

Par ailleurs, il est également possible, conformément à ce deuxième mode de mise en oeuvre préféré, d'ajouter des fibres synthétiques aux fibres de cellulose, par exemple en les dispersant conjointement avec ces dernières dans la phase aqueuse et, dans le cas où l'on désire utiliser un ou plusieurs polymères aptes à servir d'agents d'interface entre les fibres et l'élastomère et/ou un ou plusieurs adjuvants autres que ceux spécifiquement envisagés ci-avant, d'incorporer ces éléments soit dans la dispersion de fibres de cellulose, soit dans le latex, soit encore dans leur mélange tel qu'obtenu à l'étape a).

Selon un troisième mode de mise en oeuvre préféré du procédé conforme à l'Invention, l'élastomère est un élastomère réticulable ou un élastomère thermoplastique qui est utilisé sous une forme sèche, et le procédé comprend :

a) le mélange des fibres de cellulose et de l'élastomère en présence, éventuellement, d'un système de réticulation convenablement choisi, et l'incorporation d'un ou plusieurs agents gonflants dans ce mélange,
b) la mise en forme du mélange par extrusion, calandrage et/ou moulage et, si nécessaire,
c) le chauffage du produit ainsi mis en forme pour obtenir la décomposition du ou des agents gonflants qu'il renferme, son expansion et, éventuellement, sa réticulation.

Au sens de la présente Invention, on entend par agent gonflant, tout agent qui, en se décomposant sous l'action de la température, est capable de libérer du gaz et, partant, de provoquer une expansion de la matière dans laquelle il se trouve.

Ainsi, dans ce troisième mode de mise en oeuvre préféré du procédé conforme à l'Invention, l'agent apte à conférer une structure alvéolaire à la matière spongieuse est constitué par au moins un agent gonflant qui est incorporé dans le mélange fibres de cellulose/élastomère avant que celui-ci ne soit mis en forme et qui, en se décomposant soit au cours de la mise en forme du mélange, soit à l'issue de cette mise en forme, permet d'obtenir une expansion du produit résultant et, ainsi, la formation dans ce produit d'une structure alvéolaire.

De manière préférée, on incorpore, dans le mélange fibres de cellulose/élastomère, plusieurs agents gonflants présentant des cinétiques de décomposition différentes pour obtenir une matière spongieuse à large distribution de tailles d'alvéoles. Toutefois, il est possible de n'utiliser qu'un seul agent gonflant lorsque l'on souhaite que les alvéoles de la matière spongieuse soient sensiblement toutes de la même taille.

Les agents gonflants utiles selon l'Invention peuvent notamment être choisis parmi l'azodicarbonamide, l'azodiisobutyronitrile, le p,p'-oxy-bis-benzènesulfonyl hydrazide, le p-toluène sulfonyl semicarbazide et le p-toluène sulfonyl hydrazide.

Lorsque l'élastomère est un élastomère réticulable, il est par ailleurs avantageux d'ajuster, en jouant sur la nature et la quantité des agents de réticulation et des agents gonflants, les cinétiques d'expansion et de réticulation du produit issu de la mise en forme, de sorte que l'expansion soit maximale au moment où la réticulation est elle-même maximale, ce qui permet de stabiliser ce produit alors qu'il est à son maximum d'expansion.

Selon une première variante de ce troisième mode de mise en oeuvre préféré, l'élastomère étant un élastomère réticulable, la mise en forme du mélange fibres de cellulose/élastomère est réalisée par extrusion à une température comprise entre 60 et 80°C, puis le produit extrudé est chauffé à une température comprise entre 120 et 180°C, directement à la sortie de l'extrudeuse, par exemple par passage dans un tunnel à micro-ondes ou dans un tube de vapeur, pour obtenir son expansion et sa réticulation.

Selon une autre variante de ce troisième mode de mise en oeuvre préféré, l'élastomère étant un élastomère thermoplastique, la mise en forme du mélange fibres de cellulose/élastomère est réalisée par extrusion à une température comprise entre 140 et 180°C et l'expansion du produit extrudé s'effectue spontanément à sa sortie de la filière.

Selon encore une autre variante de ce troisième mode de mise en oeuvre préféré, l'élastomère étant un élastomère réticulable, la mise en forme du mélange fibres de cellulose/élastomère est réalisée par un calandrage suivi d'un moulage par compression, lequel est effectué à une température comprise entre 120 et 150°C et permet une réticulation partielle du produit moulé. Après démoulage, ce produit est chauffé à une température comprise entre 150 et 200°C, par exemple au moyen d'une étuve ou d'un autoclave à air chaud, pour obtenir son expansion et achever sa réticulation.

Selon encore une autre variante de ce troisième mode de mise en oeuvre préféré, qui s'applique aussi bien dans le cas où l'élastomère est un élastomère réticulable que dans celui où il est thermoplastique, la mise en forme du mélange fibres de cellulose/élastomère est réalisée par le remplissage partiel d'un moule par injection ou par transfert, puis par l'expansion dudit mélange et, éventuellement, sa réticulation simultanée au sein du moule pour obtenir le remplissage total de ce dernier. Lorsque l'élastomère est un élastomère réticulable, le moule est préalablement chauffé, par exemple à une température comprise entre 150 et 200°C.

Selon un quatrième mode de mise en oeuvre préféré du procédé conforme à l'Invention, l'élastomère est un élastomère thermoplastique qui est utilisé sous une forme sèche, et le procédé comprend :

a) le mélange des fibres de cellulose et de l'élastomère, et
b) la mise en forme du mélange par extrusion et l'incorporation d'un agent d'expansion dans ce mélange au cours de sa mise en forme.

Selon une première variante de ce quatrième mode de mise en oeuvre préféré, l'agent d'expansion est de l'eau ou un gaz tel que du propane ou du Fréon, qui est introduit dans l'extrudeuse au cours de la plastification du mélange fibres de cellulose/élastomère, et l'expansion du produit extrudé s'effectue spontanément à sa sortie de la filière par la vaporisation de l'eau ou du gaz qu'il renferme.

Ceci est rendu possible par exemple par l'application à la sortie de la filière de conditions de température et de pression propres à créer un déséquilibre thermodynamique et, partant, le passage de l'eau ou du gaz contenu dans le produit extrudé d'un état liquide à un état gazeux.

Selon une autre variante de ce troisième mode de mise en oeuvre préféré, l'agent d'expansion est constitué par un ou plusieurs agents gonflants qui sont introduits dans l'extrudeuse au cours de son alimentation en mélange fibres de cellulose/élastomère et l'expansion du produit extrudé s'effectue spontanément à sa sortie de la filière.

Dans tous les cas, l'extrusion est avantageusement conduite à une température comprise entre 140 et 190°C.

Quel que soit le mode de mise en oeuvre du procédé conforme à l'Invention, ce procédé comprend, dès lors qu'il fait appel à l'utilisation d'un élastomère réticulable, l'incorporation d'un système de réticulation convenablement choisi en fonction de cet élastomère et pouvant comprendre, outre un agent de réticulation proprement dit (soufre, peroxydes), des promoteurs et des accélérateurs de réticulation, au cours de la préparation du mélange fibres de cellulose/élastomère.

De manière similaire, ce procédé comprend, dès lors qu'il utilise, en tant qu'agent d'interface entre les fibres cellulosiques (et, éventuellement, les fibres synthétiques) et l'élastomère, un polymère dont la réticulation nécessite la présence d'un système de réticulation spécifique - ce qui est par exemple le cas de l'alcool polyvinylique -, l'addition d'un tel système de réticulation, lequel peut, là aussi, comprendre, non seulement un agent de réticulation proprement dit, mais également des promoteurs et des accélérateurs de réticulation.

Par ailleurs, quel que soit le mode de mise en oeuvre du procédé conforme à l'Invention, celui-ci comprend, de plus, la découpe de la matière spongieuse obtenue aux dimensions et aux formes (blocs, plaques, feuilles, ...) appropriées aux usages auxquels elle est destinée.

La présente Invention a, encore, pour objet, des éponges, caractérisées en ce qu'elles comprennent une matière spongieuse telle que précédemment définie.

Ces éponges, qui peuvent être aussi bien destinées à la toilette qu'au nettoyage de surfaces, présentent une épaisseur comprise, de préférence, entre 1 et 15 cm, de manière particulièrement préférée, entre 1,5 et 10 cm et de manière encore plus préférée, entre 2 et 5 cm pour en faciliter la prise en main.

La présente Invention a, en outre, pour objets des articles de ménage comprenant un élément spongieux tels que balais et raclettes pour l'entretien des surfaces (sols, murs, glaces, vitres, ...), caractérisés en ce que ledit élément spongieux comprend une matière spongieuse telle que précédemment définie.

La présente Invention sera mieux comprise à l'aide du complément de description qui suit et qui se réfère à des exemples de réalisation de matières spongieuses conformes à l'Invention et de démonstration de leurs propriétés.

Il va de soi, toutefois, que ces exemples sont donnés uniquement à titre d'illustrations de l'objet de l'Invention dont ils ne constituent en aucune manière une limitation.

**EXEMPLE 1 : PREPARATION D'UNE MATIERE SPONGIEUSE A PARTIR D'UN LATEX ET DE FIBRES CELLULOSIQUES**

Dans un turbodisperseur (Société LÖDIGE), on prépare une pâte de fibres cellulosiques longues en dispersant progressivement et sous une forte agitation (1200-1500 tr/min), 235 g de feuilles de linter de coton préalablement découpées en lambeaux de quelques cm de côté, dans 2,255 kg d'eau, et en maintenant l'agitation pendant environ 10 minutes.

On verse sur la pâte de fibres ainsi préparée 141 g d'une solution aqueuse de CaCl$_2$ à 10% (destiné à favoriser la coagulation du latex) et on mélange l'ensemble pendant 1 minute à 1200-1500 tr/min. On incorpore alors, sous une faible agitation (300 tr/min), 559 g d'un latex de caoutchouc butadiène-acrylonitrile carboxylé présentant une teneur en caoutchouc sec de 42% et contenant un système de vulcanisation constitué par 1 part d'oxyde de zinc, 1 part de soufre et 1 part de dibutyldithiocarbamate de zinc (accélérateur de réticulation, donneur de soufre) pour 100 parts de caoutchouc sec, puis 1,359 kg de morceaux de glace de forme sphérique (glace granulée) et d'un diamètre se distribuant régulièrement entre 0,1 et 10 mm.

Le mélange résultant est versé dans un moule de manière à obtenir, dans le moule, une hauteur de mélange d'environ 10 cm et le moule est placé dans un congélateur, à une température de -30°C, pendant au minimum 3 heures.

Au terme de cette période de congélation et après démoulage, le bloc congelé ainsi obtenu est enfermé dans une grille de contention métallique et placé pendant 30 minutes dans un autoclave en vapeur vive présentant une température de 140°C, de manière à obtenir la fusion des morceaux de glace qu'il contient, l'élimination de l'eau résultant de cette fusion et la réticulation du latex, puis pendant 3 heures 30 dans une étuve à air ventilé présentant une température de 130°C pour obtenir son séchage. La matière spongieuse résultante peut alors être découpée aux dimensions souhaitées.

**EXEMPLE 2 : PREPARATION D'UNE MATIERE SPONGIEUSE A PARTIR D'UN LATEX ET D'UN MELANGE DE FIBRES CELLULOSIQUES**

Dans un turbodisperseur, on prépare une pâte de fibres cellulosiques longues en dispersant progressivement et sous une faible agitation (300-350 tr/min), 117 g de feuilles de linter de coton, préalablement découpées en lambeaux de quelques cm de côté, dans 1,127 kg d'eau. Après introduction dans l'eau de la totalité des lambeaux de feuilles, on porte l'agitation à 900 tr/min et on la maintient pendant 5 à 10 minutes.

Par ailleurs, dans un mélangeur planétaire, on prépare une pâte de fibres cellulosiques courtes en dispersant, sous une faible agitation (300 tr/min), 117 g de fibres ARBOCELL® PWC 500 (Société RETTENMAIER & SOHNE) dans 1,127 kg d'eau et en maintenant l'agitation jusqu'à l'obtention d'une pâte homogène.

On introduit alors, toujours sous une faible agitation, la pâte de fibres longues dans la pâte de fibres courtes ainsi obtenue et l'agitation est maintenue quelques minutes de manière à obtenir un mélange homogène.

Dans la cuve d'un mélangeur planétaire, on ajoute, à 2,490 kg de ce mélange, successivement et sous une faible agitation :

- 141 g d'une solution aqueuse de CaCl$_2$ à 10%,
- 559 g de latex PERBUNAN® N VT (latex de caoutchouc butadiène-acrylonitrile carboxylé commercialisé par la Société BAYER et présentant une teneur en caoutchouc sec de 42%),
- 9,4 g de soufre, 4,7 g de diéthyldithiocarbamate de zinc (ZDEC - accélérateur de réticulation, donneur de soufre) et 4,7 g de mercaptobenzothiazole de zinc (ZMBT -accélérateur de réticulation, donneur de soufre), et
- 2 kg de morceaux de glace sphériques et présentant un diamètre se distribuant régulièrement entre 0,1 et 10 mm.

Le mélange ainsi obtenu est immédiatement versé dans un moule de manière à obtenir, dans ce moule, une hauteur de mélange d'environ 10 cm et le moule est placé dans un congélateur, dans les mêmes conditions que celles décrites dans l'exemple 1.

A l'issue de cette période de congélation et après démoulage, le bloc congelé est enfermé dans une grille de contention métallique et placé pendant 30 minutes dans un autoclave en vapeur vive présentant une température de 140°C, puis pendant 3 heures 30 dans une étuve à air ventilé présentant une température de 120°C comme décrit dans l'exemple 1.

**EXEMPLE 3 : PREPARATION D'UNE MATIERE SPONGIEUSE A PARTIR D'UN LATEX ET D'UN MELANGE DE FIBRES CELLULOSIQUES ET DE FIBRES DE POLYAMIDES**

Après avoir découpé des feuilles de linters de coton en lambeaux de longueur comprise entre environ 8 mm et 1 cm au moyen d'une granulatrice, on introduit, dans un turbodisperseur, 141,7 g de lambeaux ainsi obtenus, 12,3 g de fibres de polyamide (Société LE FLOCKAGE) et 1,386 kg d'eau et on soumet l'ensemble à une agitation de 850 tr/min pendant 3 minutes. On obtient ainsi 1,540 kg d'une pâte de fibres comprenant un mélange de fibres cellulosiques et de fibres de polyamide et dans lequel ces dernières représentent 8% en masse de la masse totale des fibres.

Par ailleurs, dans une cuve munie d'un agitateur magnétique (indice 6 de l'agitateur magnétique), on ajoute, à 560 g de latex CHEMIGUM® 248 (latex de caoutchouc butadiène-acrylonitrile commercialisé par la Société GOODYEAR et présentant une teneur en caoutchouc sec de 55%), successivement :

- 12,3 g d'AEROSOL® 22 (agent tensioactif- Société CYTEC), et
- 49,2 g d'un système de réticulation préalablement préparé en dispersant, dans un agitateur (Société RAYNERI) muni d'une pâle défloculeuse et sous une agitation vigoureuse, 100 g de soufre, 50 g de ZDEC et 50 g de ZMBT dans 200 ml d'une solution contenant 5% de méthylène bis-naphtalène de sodium (agent dispersant disponible auprès de la Société BASF sous la référence TAMOL® ), et on maintient l'agitation pendant plusieurs minutes pour obtenir un mélange homogène.

Dans un turbodisperseur, on ajoute à la pâte de fibres précédemment obtenue, successivement et sous faible agitation, 184,8 g d'une solution de $CaCl_2$ à 10% et 3,08 g de CELACOL® (hydroxypropylméthylcellulose commercialisée par la Société COURTAULDS CHEMICALS), puis on incorpore le latex dans le mélange résultant et on soumet l'ensemble à une agitation de 800 tr/min pendant 5 minutes de manière à induire la formation d'une mousse. On expulse alors cette mousse du turbodisperseur en portant l'agitation à 1000 tr/min et on la récupère dans un bécher pour la verser immédiatement dans un moule que l'on remplit sur une hauteur d'environ 6 cm. Après un lissage de la surface de la mousse pour obtenir une hauteur régulière de remplissage du moule, ce dernier est aussitôt placé dans un congélateur à une température de -20°C et maintenu à cette température pendant au minimum 3 heures.

A l'issue de cette période de congélation et après démoulage, le bloc congelé est placé dans une étuve à air ventilé réglée à une température de 120°C et maintenu dans cette étuve pendant environ 3 heures de manière à le faire sécher (ce séchage étant suivi par l'évolution de la masse du bloc) et à obtenir la réticulation du latex. Après un écroûtage, la matière spongieuse ainsi obtenue peut alors être découpée aux dimensions souhaitées.

## EXEMPLE 4 : PREPARATION D'UNE MATIERE SPONGIEUSE A PARTIR D'UN LATEX, DE SILICE ET D'UN MELANGE DE FIBRES CELLULOSIQUES ET DE FIBRES DE POLYAMIDES

On obtient une matière spongieuse conforme à l'Invention en suivant un protocole opératoire similaire à celui décrit à l'exemple 3 ci-avant, à ces différences près que :

- on prépare le système de réticulation par dispersion de 75 g de soufre, 25 g de ZDEC, 25 g de ZMBT et 125 g d'oxyde de zinc dans 200 ml d'une solution aqueuse contenant 5% de TAMOL® ,
- on mélange, prélablement à son introduction dans le latex, ce système de réticulation avec 250 g d'ULTRASIL® VN3 (silice commercialisée par la Société RHONE POULENC) et on soumet l'ensemble à un broyage dans un broyeur à billes de manière à obtenir une parfaite homogénéisation, et enfin
- l'expulsion de la mousse formée par agitation du mélange de fibres et de latex (incluant le système de réticulation et la silice) dans le turbodisperseur est obtenue en poursuivant l'agitation de ce mélange à une vitesse de 800 tr/min (et non, de 1000 tr/min comme dans l'exemple 3).

## EXEMPLE 5 : PREPARATION D'UNE MATIERE SPONGIEUSE A PARTIR D'UN LATEX, D'ALCOOL POLYVINYLIQUE ET D'UN MELANGE DE FIBRES CELLULOSIQUES ET DE FIBRES POLYAMIDE

On obtient une matière spongieuse conforme à l'Invention en suivant un protocole opératoire similaire à celui décrit dans l'exemple 3, à ces différences près que :

- on disperse les fibres (c'est-à-dire les 141,7 g de lambeaux de linters de coton et les 12,3 g de fibres de polyamide) dans 1,185 kg d'eau de manière à obtenir 1,338 kg de pâte de fibres,
- on incorpore dans cette pâte, en plus de la solution de $CaCl_2$, du CELACOL® et du latex, 205 g d'une solution aqueuse comprenant 30,8 g de GOHSENOL® (alcool polyvinylique commercialisé par la Société NIPPON GOSHEI), puis 1,2 g de PESIMEN® s 3521 (résine mélamine-formaldéhyde commercialisée par la Société MONSANTO et servant ici d'agent de réticulation de l'alcool polyvinylique) et, enfin, 0,6 g de CYCAT 600 (acide sulfonique commercialisé par la Société CYTEC et servant d'accélérateur de la réticulation de l'alcool polyvinylique), et
- on soumet le mélange final (fibres + latex + système de réticulation + alcool polyvinylique + additifs) à une agitation de 850 tr/min pendant 5 minutes de manière à obtenir la formation d'une mousse, et on expulse cette mousse du turbodisperseur en portant l'agitation de ce mélange à 950 tr/min.

**EXEMPLE 6 : PREPARATION D'UNE MATIERE SPONGIEUSE A PARTIR D'UN LATEX, DE COLLE VINYLIQUE ET D'UN MELANGE DE FIBRES CELLULOSIQUES ET DE FIBRES POLYAMIDE**

On obtient également une matière spongieuse conforme à l'Invention en suivant un protocole opératoire similaire à celui décrit à l'exemple 5, mais en remplacant l'alcool polyvinylique et son système de réticulation par 30 g de colle vinylique (Société SADER).

**EXEMPLE 7 : PREPARATION D'UNE MATIERE SPONGIEUSE A PARTIR D'UN LATEX, DE CARBONATE DE CALCIUM ET DE FIBRES CELLULOSIQUES**

Dans un turbodisperseur, on prépare une pâte de fibres cellulosiques en dispersant 209,8 g de feuilles de linters de coton, préalablement découpées en lambeaux d'environ 8 mm à 1 cm de longueur, dans 1,615 kg d'eau et en soumettant l'ensemble à une agitation de 850 tr/min pendant 3 minutes. On filtre alors ce mélange pour en retirer 361 g d'eau, de manière à obtenir 1,464 kg d'une pâte présentant une teneur en fibres cellulosiques égale à 14,3% (m/m).

Par ailleurs, dans une cuve munie d'un agitateur magnétique (indice 6 de l'agitateur magnétique), on ajoute, à 636 g de latex CHEMIGUM® 6271 (latex de caoutchouc butadiène-acrylonitrile commercialisé par la Société GOODYEAR et présentant une teneur en caoutchouc sec de 46%), successivement :

- 58,6 g d'un système de réticulation préalablement préparé en dispersant, dans un agitateur (Société RAYNERI) muni d'une pâle défloculeuse et sous une agitation vigoureuse, 47 g de soufre, 35 g de ZDEC et 117,5 g d'oxyde de zinc dans 200 ml d'une solution contenant 5% de TAMOL® ,
- 49,2 g d'une solution aqueuse de $CaCO_3$ (HYDROCARB® - Société OMYA) à 60%, et
- 12,3 g d'une solution aqueuse d'HANSA® Coagulant 4710 (organosiloxane commercialisé par la Société GOLDSCHMITT GROUP) à 5%,

et on maintient l'agitation plusieurs minutes pour obtenir un mélange homogène.

Dans un turbodisperseur, on ajoute, à la pâte de fibres précédemment obtenue, 2,9 g de CELACOL® , puis le latex et on soumet l'ensemble à une agitation de 850 tr/min pendant 5 minutes pour obtenir une mousse. On provoque alors l'expulsion de cette mousse du turbodisperseur en maintenant l'agitation à 850 tr/min, et on la récupère dans un bécher pour la verser aussitôt dans un moule que l'on remplit sur une hauteur d'environ 6 cm.

Après un lissage de la surface de la mousse pour obtenir une hauteur régulière de remplissage du moule, celui-ci est immédiatement placé dans une étuve à air ventilé réglée à une température de 120°C et il est maintenu dans cette étuve pendant environ 6 heures de manière à obtenir à la fois la coagulation de la mousse, le séchage du produit résultant de cette coagulation et la réticulation du latex. Après un écroûtage, la matière spongieuse ainsi obtenue peut alors être découpée aux dimensions souhaitées.

**PROPRIETES DES MATIERES SPONGIEUSES CONFORMES A L'INVENTION**

Les propriétés des matières spongieuses conformes à l'Invention ont été appréciées en déterminant :

- leur densité,
- leur capacité d'absorption d'eau,
- leur capacité de rétention d'eau après un essorage manuel,
- leur résistance à la traction, et
- leur pouvoir d'essuyage.

La densité a été déterminée en établissant le rapport (d) entre la masse volumique de ces matières spongieuses et la masse volumique de l'eau.

La capacité d'absorption d'eau a été déterminée en pesant les matières spongieuses lorsqu'elles sont parfaitement sèches et après immersion dans un volume d'eau, puis en établissant le rapport (A) selon la formule :

$$A = \frac{\text{masse après immersion dans l'eau - masse sèche}}{\text{masse sèche}} \times 100$$

tandis que la capacité de rétention d'eau après un essorage manuel a été déterminée en pesant ces mêmes matières spongieuses après un essorage manuel vigoureux et en établissant le rapport (R) selon la formule :

$$R = \frac{\text{masse après immersion dans l'eau - masse après essorage manuel}}{\text{masse sèche}} \times 100$$

La résistance à la traction a été, elle, déterminée en soumettant des éprouvettes mesurant entre 5 et 6 cm de longueur, 2,5 et 3,5 cm de largeur et entre 1,5 et 2,5 cm d'épaisseur et préparées par découpage des matières spongieuses à tester, à une traction au moyen d'un dynamomètre électronique réglé à 300 mm/mn jusqu'à l'obtention d'une rupture.

Enfin, le pouvoir d'essuyage a été apprécié par l'existence ou non de traces d'eau sur une surface préalablement mouillée après essuyage de cette surface par lesdites matières spongieuses.

A titre d'exemples, les résultats obtenus pour des matières spongieuses préparées conformément aux exemples 1, 2, 3, 4 et 5 - et ci-après dénommées respectivement matière 1, matière 2, matière 3, matière 4 et matière 5-sont exprimés dans le Tableau 1 qui suit.

TABLEAU 1

|  | d | A (%) | R (%) | C (MPa) | Pouvoir d'essuyage |
|---|---|---|---|---|---|
| **Matière 1** | 0,05 | 1000 | ND | ND | pas de trace d'eau |
| **Matière 2** | 0,1 | 900 | ND | ND | pas de trace d'eau |
| **Matière 3** | 0,07 | 1100 | 78 | 0,15 | pas de trace d'eau |
| **Matière 4** | 0,07 | 1000 | 85 | 0,13 | pas de trace d'eau |
| **Matière 5** | 0,06 | 1150 | 82 | 0,12-0,15 | pas de trace d'eau |
| ND : non déterminé | | | | | |

**Revendications**

1. Matière spongieuse comprenant un mélange de fibres de cellulose et d'au moins un élastomère, **caractérisée en ce qu'**elle présente :

   - une structure alvéolaire formée par des alvéoles dont la taille est comprise entre 0,1 et 10 mm,
   - une densité comprise entre 0,03 et 0,1,
   - une capacité d'absorption d'eau au moins égale à 750%, et
   - une capacité de rétention d'eau après un essorage manuel inférieure à 100%.

2. Matière spongieuse selon la revendication 1, **caractérisée en ce qu'**elle comprend des fibres cellulosiques ayant été préalablement soumises à un traitement propre à favoriser leur enchevêtrement au sein de l'élastomère.

3. Matière spongieuse selon la revendication 2, **caractérisée en ce qu'**elle comprend des fibres cellulosiques ayant été préalablement soumises à une fibrillation.

4. Matière spongieuse selon l'une quelconque des revendications 1 à 3, **caractérisée en ce que** l'élastomère est choisi parmi les caoutchoucs polybutadiène, les copolymères de butadiène-styrène, les copolymères butadiène-acrylonitrile, les copolymères et terpolymères d'éthylène et de propylène, les copolymères séquencés styrène-butadiène ou styrène-isoprène, les copolymères séquencés styrène-éthylènebutylène-styrène, les élastomères thermoplastiques dérivés des polyoléfines, les copolymères d'octène et d'éthylène, les copolymères d'éthylacrylate et autres acrylates, les polychloroprènes, les polyéthylènes chlorés, et leurs mélanges.

5. Matière spongieuse selon l'une quelconque des revendications 1 à 4, **caractérisée en ce que** la matière spongieuse comprend des fibres synthétiques choisies parmi les fibres de polyamide, les fibres de polyester, les fibres de polyéthylène, les fibres de polypropylène, les fibres de polyacrylonitrile, les fibres d'alcool polyvinylique, et leurs mélanges.

6. Matière spongieuse selon la revendication 5, **caractérisée en ce que** lesdites fibres synthétiques représentent au plus 20% et, de préférence, entre 5 et 15% en masse de la masse totale des fibres présentes dans cette matière.

7. Matière spongieuse selon l'une quelconque des revendications 1 à 7, **caractérisée en ce qu'**elle comprend un ou plusieurs polymères servant d'agents d'interface entre les fibres et l'élastomère et choisis parmi les alcools polyvinyliques, les résines mélamine-formaldéhyde, les colles vinyliques et les polyuréthannes.

8. Matière spongieuse selon l'une quelconque des revendications 1 à 7, **caractérisée en ce qu'**elle comprend un ou plusieurs adjuvants choisis parmi les charges claires, les plastifiants, les colorants ou pigments, les agents stabilisants tels que les antioxydants, les agents anti-ultraviolets, les antiozonants, les fongicides, les bactéricides, les parfums microencapsulés, les agents épaississants, les agents tensioactifs, les agents de coagulation du latex et les agents de réticulation.

9. Matière spongieuse selon l'une quelconque des revendications 1 à 8, **caractérisée en ce que** le rapport entre la masse totale des fibres et la masse d'élastomère présents dans cette matière est compris entre 2 et 0,2 et, de préférence, entre 1,5 et 0,3.

10. Matière spongieuse selon l'une quelconque des revendications 1 à 9, **caractérisée en ce qu'**elle présente une densité comprise entre 0,03 et 0,08 et une capacité d'absorption d'eau comprise entre 900 et 1200%.

11. Matière spongieuse selon l'une quelconque des revendications 1 à 10, **caractérisée en ce qu'**elle présente une résistance à la traction au moins égale à 0,1 MPa.

12. Procédé de préparation d'une matière spongieuse selon l'une quelconque des revendications 1 à 11, **caractérisé en ce qu'**il comprend :

   a) la préparation d'un mélange comprenant au moins des fibres de cellulose et un élastomère,
   b) la mise en forme de ce mélange,
   c) l'incorporation dans le mélange, au cours de l'étape a) ou de l'étape b), d'un agent apte à conférer, éventuellement par un changement d'état physique, une structure alvéolaire au produit obtenu à l'étape b) et, si nécessaire,
   d) l'application au produit obtenu à l'étape b) d'un traitement apte à assurer le changement d'état physique dudit agent et/ou la réticulation dudit produit.

13. Procédé selon la revendication 12, **caractérisé en ce que** l'élastomère est un élastomère réticulable qui est utilisé sous la forme d'un latex, et **en ce qu'**il comprend :

   a) la dispersion des fibres de cellulose dans une phase aqueuse, le mélange de cette dispersion et du latex en présence d'un système de réticulation convenablement choisi, et l'incorporation de morceaux de glace dans ce mélange,
   b) la mise en forme du mélange par congélation, et
   c) le chauffage du produit résultant de la congélation pour obtenir la fusion des morceaux de glace qu'il contient, sa réticulation et son séchage.

14. Procédé selon la revendication 13, **caractérisé en ce que** les morceaux de glace incorporés dans le mélange dispersion de fibres de cellulose/latex sont constitués par un mélange de morceaux de glace sensiblement sphériques et de diamètres compris entre 0,1 et 10 mm.

15. Procédé selon la revendication 13 ou la revendication 14, **caractérisé en ce que** la congélation du mélange dispersion de fibres de cellulose/latex après incorporation des morceaux de glace, est réalisée en plaçant ce mélange à une température comprise entre -10 et -40°C et en le maintenant à cette température pendant une durée comprise entre 2 et 5 heures.

16. Procédé selon l'une quelconque des revendications 13 à 15, **caractérisé en ce que** le chauffage du produit issu de la congélation est réalisé en soumettant ledit produit à une température comprise entre 100 et 200°C.

17. Procédé selon la revendication 12, **caractérisé en ce que** l'élastomère est un élastomère réticulable qui est utilisé sous la forme d'un latex, et **en ce qu'**il comprend :

   a) la dispersion des fibres de cellulose dans une phase aqueuse, le mélange de cette dispersion et du latex en présence d'un système de réticulation convenablement choisi, et la transformation du mélange résultant en une mousse,

b) la mise en forme de cette mousse par coagulation, et

c) le chauffage du produit résultant de cette coagulation pour obtenir sa réticulation et son séchage.

**18.** Procédé selon la revendication 17, **caractérisé en ce que** la transformation du mélange dispersion de fibres de cellulose/latex en une mousse est réalisée en soumettant ce mélange à une agitation mécanique.

**19.** Procédé selon la revendication 17 ou la revendication 18, **caractérisé en ce que** la coagulation de la mousse est obtenue par sa congélation.

**20.** Procédé selon la revendication 19, **caractérisé en ce que** la congélation de la mousse est réalisée en plaçant cette mousse à une température comprise entre -10 et -30°C.

**21.** Procédé selon la revendication 17 ou la revendication 18, **caractérisé en ce que** la coagulation de la mousse est obtenue par une thermosensibilisation du latex qu'elle renferme.

**22.** Procédé selon la revendication 21, **caractérisé en ce que** le procédé comprend l'addition, au cours de l'étape a), d'un agent coagulant apte à réagir sous l'effet d'une augmentation de la température, et **en ce que** la coagulation de la mousse est obtenue en plaçant celle-ci à une température au moins égale à 25°C et, de préférence, supérieure à 35°C.

**23.** Procédé selon l'une quelconque des revendications 17 à 22, **caractérisé en ce que** le chauffage du produit résultant de la coagulation est réalisé en soumettant ledit produit à une température comprise entre 100 et 200°C.

**24.** Procédé selon l'une quelconque des revendications 17 à 23, **caractérisé en ce qu'**il comprend l'addition, au cours de l'étape a), d'un agent tensioactif et/ou d'un agent de stabilisation de la mousse et/ou d'un agent de coagulation du latex.

**25.** Procédé selon la revendication 12, **caractérisé en ce que** l'élastomère est un élastomère réticulable ou un élastomère thermoplastique qui est utilisé sous une forme sèche, et **en ce qu'**il comprend :

a) le mélange des fibres de cellulose et de l'élastomère en présence, éventuellement, d'un système de réticulation convenablement choisi, et l'incorporation d'un ou plusieurs agents gonflants dans ce mélange,

b) la mise en forme du mélange par extrusion, calandrage et/ou moulage et, si nécessaire,

c) le chauffage du produit ainsi mis en forme pour obtenir la décomposition du ou des agents gonflants qu'il renferme, son expansion et, éventuellement, sa réticulation.

**26.** Procédé selon la revendication 25, **caractérisé en ce qu'**on incorpore, dans le mélange fibres de cellulose/élastomère, plusieurs agents gonflants présentant des cinétiques de décomposition différentes pour obtenir une matière spongieuse à large distribution de tailles d'alvéoles.

**27.** Procédé selon la revendication 25 ou la revendication 26, **caractérisé en ce que**, l'élastomère étant un élastomère réticulable, la mise en forme du mélange fibres de cellulose/élastomère est réalisée par extrusion à une température comprise entre 60 et 80°C, puis le produit extrudé est chauffé, à une température comprise entre 120 et 180°C, directement à la sortie de l'extrudeuse.

**28.** Procédé selon la revendication 25 ou la revendication 26, **caractérisé en ce que**, l'élastomère étant un élastomère thermoplastique, la mise en forme du mélange fibres de cellulose/élastomère est réalisée par extrusion à une température comprise entre 140 et 180°C et l'expansion du produit extrudé s'effectue spontanément à sa sortie de la filière.

**29.** Procédé selon la revendication 25 ou la revendication 26, **caractérisé en ce que**, l'élastomère étant un élastomère réticulable, la mise en forme du mélange fibres de cellulose/élastomère est réalisée par un calandrage suivi d'un moulage par compression à une température comprise entre 120 et 150°C, puis le produit moulé est chauffé à une température comprise entre 150 et 200°C.

**30.** Procédé selon la revendication 25 ou la revendication 26, **caractérisé en ce que** la mise en forme du mélange fibres de cellulose/élastomère est réalisée par le remplissage partiel d'un moule par injection ou par transfert, puis par l'expansion dudit mélange et, éventuellement, sa réticulation simultanée au sein du moule pour obtenir un remplissage total de ce dernier.

**31.** Procédé selon la revendication 12, **caractérisé en ce que** l'élastomère est un élastomère thermoplastique qui est utilisé sous une forme sèche, et **en ce qu'**il comprend :

a) le mélange des fibres de cellulose et de l'élastomère, et
b) la mise en forme du mélange par extrusion et l'incorporation d'un agent d'expansion dans ce mélange au cours de sa mise en forme.

**32.** Procédé selon la revendication 31, **caractérisé en ce que** l'agent d'expansion est de l'eau ou un gaz qui est introduit dans l'extrudeuse au cours de la plastification du mélange fibres de cellulose/élastomère, et l'expansion du produit extrudé s'effectue spontanément à sa sortie de la filière par la vaporisation de l'eau ou du gaz qu'il renferme.

**33.** Procédé selon la revendication 31, **caractérisé en ce que** l'agent d'expansion est constitué par un ou plusieurs agents gonflants qui sont introduits dans l'extrudeuse au cours de son alimentation en mélange fibres de cellulose/élastomère, et l'expansion du produit extrudé s'effectue spontanément à sa sortie de la filière.

**34.** Procédé selon l'une quelconque des revendications 31 à 33, **caractérisé en ce que** l'extrusion est conduite à une température comprise entre 140 et 190°C.

**35.** Eponges, **caractérisées en ce qu'**elles comprennent une matière spongieuse selon l'une quelconque des revendications 1 à 11,

**36.** Articles de ménage comprenant un élément spongieux tels que balais et raclettes pour l'entretien des surfaces, **caractérisés en ce que** ledit élément spongieux comprend une matière spongieuse selon l'une quelconque des revendications 1 à 11.


**Claims**

**1.** Spongy material comprising a mixture of cellulose fibres and at least one elastomer, **characterised in that** it has:

- an alveolar structure formed from alveoli which are between 0.1 and 10mm in size,
- a density between 0.03 and 0.1,
- a water absorption capacity at least equal to 750%, and
- a water retention capacity after manual wringing of less than 100%.

**2.** Spongy material according to claim 1, **characterised in that** it comprises cellulose fibres which have previously been subjected to treatment able to promote their entanglement within the elastomer.

**3.** Spongy material according to claim 2, **characterised in that** it comprises cellulose fibres having been previously subjected to fibrillation.

**4.** Spongy material according to any one of claims 1 to 3, **characterised in that** the elastomer is selected from among polybutadiene rubbers, butadiene-styrene copolymers, butadiene-acrylonitrile copolymers, ethylene and propylene copolymers and terpolymers, styrene-butadiene or styrene-isoprene sequenced copolymers, styreneethylene-butylene-styrene sequenced copolymers, thermoplastic elastomers derived from polyolefins, octene and ethylene copolymers, copolymers of ethylacrylate and other acrylates, polychloroprenes, chlorinated polyethylenes, and mixtures thereof.

**5.** Spongy material according to any one of claims 1 to 4, **characterised in that** the spongy material comprises synthetic fibres selected from among polyamide fibres, polyester fibres, polyethylene fibres, polypropylene fibres, polyacrylonitrile fibres, polyvinyl alcohol fibres, and mixtures thereof,

**6.** Spongy material according to claim 5, **characterised in that** the said synthetic fibres represent at most 20% and preferably between 5 and 15% by weight of the total weight of the fibres in this material.

7. Spongy material according to any one of claims 1 to 7, **characterised in that** it comprises one or a plurality of polymers serving as interface agents between the fibres and the elastomer and selected from among polyvinyl alcohols, melamineformaldehyde resins, vinyl adhesives and polyurethanes.

8. Spongy material according to any one of claims 1 to 7, **characterised in that** it comprises one or a plurality of additives selected from among clear charges, plasticisers, dyestuffs or pigments, stabilising agents such as anti-oxidants, antiultraviolet agents, anti-ozonisers, fungicides, bactericides, microencapsulated perfumes, thickening agents, surfactants, agents for coagulation of latex and cross-linking agents.

9. Spongy material according to any one of claims 1 to 8, **characterised in that** the ratio between the total weight of the fibres and the weight of elastomer present in this material is between 2 and 0.2 and preferably between 1.5 and 0.3.

10. Spongy material according to any one of claims 1 to 9, **characterised in that** it has a density between 0.03 and 0.08 and a water absorption capacity between 900 and 1200%.

11. Spongy material according to any one of claims 1 to 10, **characterised in that** it has a tensile strength at least equal to 0.1 MPa.

12. Method of producing a spongy material according to any one of claims 1 to 11, **characterised in that** it comprises:

   a) the production of a mixture comprising at least cellulose fibres and an elastomer,
   b) the shaping of this mixture,
   c) the incorporation into the mixture, during step a) or step b), of an agent able, possibly by a change in physical state, to endow the product obtained in step b) with an alveolar structure and, if necessary,
   d) the application to the product obtained in step b) of a treatment able to ensure the change in the physical state of the said agent and/or the cross-linking of the said product.

13. Method according to claim 12, **characterised in that** the elastomer is a cross-linkable elastomer which is used in the form of a latex, and **in that** it comprises:

   a) the dispersion of the cellulose fibres in an aqueous phase, the mixing of this dispersion and of the latex in the presence of a suitably selected cross-linking system, and the incorporation of pieces of ice into this mixture,
   b) the shaping of the mixture by freezing, and
   c) the heating of the product resulting from the freezing to bring about melting of the pieces of ice which it contains, its cross-linking and drying.

14. Method according to claim 13, **characterised in that** the pieces of ice incorporated into the cellulose fibre dispersion/latex mixture are formed from a mixture of substantially spherical pieces of ice with diameters between 0.1 and 10mm.

15. Method according to claim 13 or claim 14, **characterised in that** the cellulose fibre dispersion/latex mixture is frozen, after incorporation of the pieces of ice, by bringing this mixture to a temperature between -10 and -40°C and keeping it at this temperature for a duration of between 2 and 5 hours.

16. Method according to any one of claims 13 to 15, **characterised in that** the product resulting from the freezing is heated by subjecting the said product to a temperature between 100 and 200°C.

17. Method according to claim 12, **characterised in that** the elastomer is a cross-linkable elastomer which is used in the form of a latex, and **in that** it comprises:

   a) the dispersion of cellulose fibres in an aqueous phase, the mixing of this dispersion and of the latex in the presence of a suitably selected cross-linking system and the conversion of the resulting mixture into a foam,
   b) the shaping of this foam by coagulation, and
   c) the heating of the product resulting from this coagulation in order to bring about its cross-linking and drying.

18. Method according to claim 17, **characterised in that** the conversion of the cellulose fibre dispersion/latex mixture into a foam is carried out by subjecting this mixture to mechanical agitation.

19. Method according to claim 17 or claim 18, **characterised in that** the foam is made to coagulate by freezing it.

20. Method according to claim 19, **characterised in that** the foam is frozen by bringing this foam to a temperature between -10 and -30°C.

21. Method according to claim 17 or claim 18, **characterised in that** the foam is made to coagulate by thermosensitisation of the latex which it contains.

22. Method according to claim 21, **characterised in that** the method comprises the addition, during step a), of a coagulating agent able to react under the effect of an increase in temperature, and **in that** the foam is coagulated by bringing it to a temperature at least equal to 25°C and preferably higher than 35°C.

23. Method according to any one of claims 17 to 22, **characterised in that** the product resulting from the coagulation is heated by subjecting the said product to a temperature between 100 and 200°C.

24. Method according to any one of claims 17 to 23, **characterised in that** it comprises the addition, during step a), of a surfactant and/or a foam-stabilising agent and/or a latexcoagulating agent.

25. Method according to claim 12, **characterised in that** the elastomer is a cross-linkable elastomer or a thermoplastic elastomer which is used in a dry form, and **in that** it comprises:

   a) the mixing of the cellulose fibres and of the elastomer possibly in the presence of a suitably selected cross-linking system, and the incorporation of one or a plurality of inflating agents into this mixture,
   b) the shaping of the mixture by extrusion, calendering and/or moulding and, if necessary,
   c) the heating of the product thus shaped in order to obtain break-down of the inflating agent(s) which it contains, its expansion and possibly its cross-linking.

26. Method according to claim 25, **characterised in that** a plurality of inflating agents having different decomposition kinetics are incorporated into the cellulose fibre/elastomer mixture in order to obtain a spongy material with a wide range of alveolar sizes.

27. Method according to claim 25 or claim 26, **characterised in that** since the elastomer is a cross-linkable elastomer, the cellulose fibre/elastomer mixture is shaped by extrusion at a temperature between 60 and 80°C, then the extruded product is heated to a temperature between 120 and 180°C, directly at the output of the extruder.

28. Method according to claim 25 or claim 26, **characterised in that** since the elastomer is a thermoplastic elastomer, the cellulose fibre/elastomer mixture is shaped by extrusion at a temperature between 140° and 180°C and the extruded product expands spontaneously at the output of the die.

29. Method according claim 25 or claim 26, **characterised in that** since the elastomer is a cross-linkable elastomer, the cellulose fibre/elastomer mixture is shaped by calendering followed by compression moulding at a temperature between 120 and 150°C, then the moulded product is heated to a temperature between 150 and 200°C.

30. Method according claim 25 or claim 26, **characterised in that** the cellulose fibre/elastomer mixture is shaped by the partial filling of a mould by injection or transfer, then by expansion of the said mixture and possibly its simultaneous cross-linking within the mould in order to fill the mould totally.

31. Method according to claim 12, **characterised in that** the elastomer is a thermoplastic elastomer which is used in a dry form, and **in that** it comprises:

   a) the mixing of the cellulose fibres and of the elastomer, and
   b) the shaping of the mixture by extrusion and the incorporation of an expanding agent into this mixture as it is being shaped.

32. Method according to claim 31, **characterised in that** the expanding agent is water or a gas which is introduced into the extruder during plasticising of the cellulose fibre/elastomer mixture, and the extruded product expands spontaneously at the output of the die by evaporation of the water or of the gas which it contains.

33. Method according to claim 31, **characterised in that** the expanding agent is formed by one or a plurality of inflating agents which are introduced into the extruder while it is being supplied with the cellulose fibre/elastomer mixture, and the extruded product expands spontaneously at the output of the die.

34. Method according to any one of claims 31 to 33, **characterised in that** the extrusion is carried out at a temperature between 140 and 190°C.

35. Sponges, **characterised in that** they comprise a spongy material according to any one of claims 1 to 11.

36. Household articles comprising a spongy element, such as sponge mops and squeegees for care of surfaces, **characterised in that** the said spongy element comprises a spongy material according to any one of claims 1 to 11.

**Patentansprüche**

1. Schwammartiges Material, welches eine Mischung von Cellulosefasern und mindestens ein Elastomer aufweist, **dadurch gekennzeichnet, daß** es aufweist:

   - eine Zellstruktur, die aus Zellen aufgebaut ist, deren Größe zwischen 0,1 und 10 mm liegt,
   - eine Dichte von zwischen 0,03 und 0,1,
   - ein Wasseraufnahmevermögen von mindestens gleich 750%, und
   - ein Wasserrückhaltevermögen nach einem Auswringen von Hand von weniger als 100%.

2. Schwammartiges Material nach Anspruch 1, **dadurch gekennzeichnet, daß** es Cellulosefasern aufweist, die vorausgehend einer Behandlung unterzogen wurden, die geeignet ist, ihre gegenseitige Verblockung im Inneren des Elastomers zu begünstigen.

3. Schwammartiges Material nach Anspruch 2, **dadurch gekennzeichnet, daß** es Cellulosefasern aufweist, die vorausgehend einem Fibrillieren unterzogen wurden.

4. Schwammartiges Material nach einem der Ansprüche 1 bis 3, **dadurch gekennzeichnet, daß** das Elastomer unter den Polybutadienkautschuken, Butadien-Styrol-Copolymeren, Butadien-Acrylnitril-Copolymeren, Copolymeren und Terpolymeren von Ethylen und Propylen, Styrol-Butadien- oder Styrol-Isopren-Blockcopolymeren, Styrol-Ethylen-Butylen-Styrol-Blockcopolymeren, von Polyolefinen abgeleiteten thermoplastischen Elastomeren, Copolymeren von Octen und Ethylen, Copolymeren von Ethylacrylat und weiteren Acrylaten, Polychloroprenen, chlorierten Polyethylenen sowie deren Mischungen ausgewählt ist.

5. Schwammartiges Material nach einem der Ansprüche 1 bis 4, **dadurch gekennzeichnet, daß** das schwammartige Material synthetische Fasern aufweist, die unter den Polyamid-, Polyester-, Polyethylen-, Polypropylen-, Polyacrylnitril-, Polyvinylalkoholfasern sowie deren Mischungen ausgewählt sind.

6. Schwammartiges Material nach Anspruch 5, **dadurch gekennzeichnet, daß** die synthetischen Fasern höchstens 20% und vorzugsweise zwischen 5 und 15 Masse-% der Gesamtmasse der in diesem Material vorhandenen Fasern ausmachen.

7. Schwammartiges Material nach einem der Ansprüche 1 bis 7, **dadurch gekennzeichnet, daß** es ein oder mehrere Polymere aufweist, die als Grenzflächenmittel zwischen den Fasern und dem Elastomer dienen und unter den Polyvinylalkoholen, den Melamin-Formaldehyd-Harzen, den Vinylklebern und den Polyurethanen ausgewählt sind.

8. Schwammartiges Material nach einem der Ansprüche 1 bis 7, **dadurch gekennzeichnet, daß** es einen oder mehrere Zusatzstoffe aufweist, die unter den durchsichtigen Füllstoffen, Weichmachern, Farbstoffen bzw. Pigmenten, Stabilisatoren wie Antioxidantien, Anti-Ultraviolett-Mitteln, Anti-Ozon-Mitteln, Fungiziden, Bakteriziden, mikroverkapselten Parfüms, Verdickungsmitteln, Tensiden, Latex-Koagulationsmitteln und Vernetzungsmitteln ausgewählt sind.

9. Schwammartiges Material nach einem der Ansprüche 1 bis 8, **dadurch gekennzeichnet, daß** das Verhältnis zwischen der in diesem Material vorhandenen Gesamtmasse der Fasern und Masse der Elastomere zwischen 2 und 0,2 und vorzugsweise zwischen 1,5 und 0,3 beträgt.

10. Schwammartiges Material nach einem der Ansprüche 1 bis 9, **dadurch gekennzeichnet, daß** es eine zwischen 0,03 und 0,08 liegende Dichte und ein zwischen 900 und 1200% liegendes Wasseraufnahmevermögen aufweist.

11. Schwammartiges Material nach einem der Ansprüche 1 bis 10, **dadurch gekennzeichnet, daß** es eine Zugfestigkeit von mindestens gleich 0,1 MPa aufweist.

12. Verfahren zur Herstellung eines schwammartigen Materials nach einem der Ansprüche 1 bis 11, **dadurch gekennzeichnet, daß** es aufweist:

   a) Herstellen einer mindestens Cellulosefasern und ein Elastomer aufweisenden Mischung,
   b) Formverarbeitung dieser Mischung,
   c) Einbringen in die Mischung im Verlauf des Schrittes a) oder des Schrittes b) eines Mittels, das geeignet ist, dem in Schritt b) erhaltenen Produkt, gegebenenfalls durch eine Veränderung des Aggregatzustandes, eine Zellstruktur zu verleihen, und erforderlichenfalls
   d) Anwendung auf das in Schritt b) erhaltene Produkt einer Behandlung, die geeignet ist, die Veränderung des Aggregatzustandes des Mittels und/oder die Vernetzung des Produktes zu bewirken.

13. Verfahren nach Anspruch 12, **dadurch gekennzeichnet, daß** das Elastomer ein vernetzbares Elastomer ist, das in Form eines Latex verwendet wird, und daß es aufweist:

   a) Dispergieren der Cellulosefasern in einer wäßrigen Phase, Mischen dieser Dispersion und des Latex in Gegenwart eines auf geeignete Weise gewählten Vernetzungssystems, und Einbringen von Eisstücken in diese Mischung,
   b) Formverarbeitung der Mischung durch Gefrieren, und
   c) Erwärmen des aus dem Gefrieren resultierenden Produktes, um das Schmelzen der in ihm enthaltenen Eisstücke, seine Vernetzung und sein Trocknen durchzuführen.

14. Verfahren nach Anspruch 13, **dadurch gekennzeichnet, daß** die in die Mischung aus Cellulosefaserdispersion und Latex eingebrachten Eisstücke aus einer Mischung von im wesentlichen kugelförmigen Eisstücken mit Durchmessern zwischen 0,1 und 10 mm bestehen.

15. Verfahren nach Anspruch 13 oder Anspruch 14, **dadurch gekennzeichnet, daß** das Gefrieren der Mischung aus Cellulosefaserdispersion und Latex nach dem Einbringen der Eisstücke durchgeführt wird, indem die Mischung auf eine Temperatur von zwischen -10 und - 40°C gebracht und während einer Zeit von zwischen 2 und 5 h auf dieser Temperatur gehalten wird.

16. Verfahren nach einem der Ansprüche 13 bis 15, **dadurch gekennzeichnet, daß** das Erwärmen des aus dem Gefrieren hervorgegangenen Produktes durchgeführt wird, indem das Produkt einer Temperatur von zwischen 100 und 200°C ausgesetzt wird.

17. Verfahren nach Anspruch 12, **dadurch gekennzeichnet, daß** das Elastomer ein vernetzbares Elastomer ist, das in Form eines Latex verwendet wird, und daß es aufweist:

   a) Dispergieren der Cellulosefasern in einer wäßrigen Phase, Mischen dieser Dispersion und des Latex in Gegenwart eines auf geeignete Weise gewählten Vernetzungssystems, und Überführen der resultierenden Mischung in einen Schaum,
   b) Formverarbeitung des Schaums durch Koagulation, und
   c) Erwärmen des aus dieser Koagulation resultierenden Produktes, um seine Vernetzung und seine Trocknung zu bewirken.

18. Verfahren nach Anspruch 17, **dadurch gekennzeichnet, daß** das Überführen der Mischung aus Cellulosefasern und Latex in einen Schaum durchgeführt wird, indem die Mischung einem mechanischen Rühren unterzogen wird.

19. Verfahren nach Anspruch 17 oder Anspruch 18, **dadurch gekennzeichnet, daß** die Koagulation des Schaums durch sein Gefrieren bewirkt wird.

**20.** Verfahren nach Anspruch 19, **dadurch gekennzeichnet, daß** das Gefrieren des Schaums durchgeführt wird, indem der Schaum auf eine Temperatur von zwischen -10 und -30°C gebracht wird.

**21.** Verfahren nach Anspruch 17 oder Anspruch 18, **dadurch gekennzeichnet, daß** die Koagulation des Schaums mittels einer Thermosensibilisierung des Latex erzielt wird, welches er einschließt.

**22.** Verfahren nach Anspruch 21, **dadurch gekennzeichnet, daß** das Verfahren im Verlauf des Schrittes a) die Zugabe eines Koagulationsmittels umfaßt, das in der Lage ist, unter der Einwirkung einer Erhöhung der Temperatur zu reagieren, und daß die Koagulation des Schaums bewirkt wird, indem er auf eine Temperatur von mindestens gleich 25°C und vorzugsweise mehr als 35°C gebracht wird.

**23.** Verfahren nach einem der Ansprüche 17 bis 22, **dadurch gekennzeichnet, daß** das Erwärmen des aus der Koagulation hervorgegangenen Produktes durchgeführt wird, indem das Produkt einer Temperatur von zwischen 100 und 200°C ausgesetzt wird.

**24.** Verfahren nach einem der Ansprüche 17 bis 23, **dadurch gekennzeichnet, daß** es im Verlauf des Schrittes a) die Zugabe eines Tensids und/oder eines Schaumstabilisators und/oder eines Latex-Koagulationsmittels aufweist.

**25.** Verfahren nach Anspruch 12, **dadurch gekennzeichnet, daß** das Elastomer ein vernetzbares Elastomer oder ein thermoplastisches Elastomer ist, das in trockener Form verwendet wird, und daß es aufweist:

a) Mischen der Cellulosefasern und des Elastomers, gegebenenfalls in Gegenwart eines auf geeignete Weise gewählten Vernetzungssystems, und Einbringen von einem oder mehreren Treibmitteln in die Mischung,
b) Formverarbeitung der Mischung durch Strangpressen, Kalandern und/oder Formen, und erforderlichenfalls
c) Erwärmen des derart formverarbeiteten Produktes, um den Abbau des bzw. der Treibmittel, die es einschließt, sein Blähen, und gegebenenfalls seine Vernetzung zu erzielen.

**26.** Verfahren nach Anspruch 25, **dadurch gekennzeichnet, daß** in die Mischung aus Cellulosefasern und Elastomer mehrere Treibmittel eingebracht werden, welche unterschiedliche Abbaukinetiken besitzen, um ein schwammartiges Material mit einer breiten Verteilung von Blasengrößen zu erhalten.

**27.** Verfahren nach Anspruch 25 oder Anspruch 26, **dadurch gekennzeichnet, daß**, wenn das Elastomer ein vernetzbares Elastomer ist, die Formverarbeitung der Mischung aus Cellulosefasern und Elastomer mittels Strangpressen bei einer zwischen 60 und 80°C liegenden Temperatur durchgeführt wird und das extrudierte Produkt daraufhin unmittelbar beim Austritt aus dem Extruder auf eine zwischen 120 und 180°C liegende Temperatur erwärmt wird.

**28.** Verfahren nach Anspruch 25 oder Anspruch 26, **dadurch gekennzeichnet, daß**, wenn das Elastomer ein thermoplastisches Elastomer ist, die Formverarbeitung der Mischung aus Cellulosefasern und Elastomer mittels Strangpressen bei einer zwischen 140 und 180°C liegenden Temperatur und durchgeführt wird, und das Blähen des extrudierten Produktes bei seinem Austritt aus der Strangpreßform spontan stattfindet.

**29.** Verfahren nach Anspruch 25 oder Anspruch 26, **dadurch gekennzeichnet, daß**, wenn das Elastomer ein vernetzbares Elastomer ist, die Formverarbeitung der Mischung aus Cellulosefasern und Elastomer mittels Kalandern durchgeführt wird, gefolgt von einer Formpreßverarbeitung bei einer zwischen 120 und 150°C liegenden Temperatur, woraufhin das geformte Produkt auf eine zwischen 150 und 200°C liegende Temperatur erwärmt wird.

**30.** Verfahren nach Anspruch 25 oder Anspruch 26, **dadurch gekennzeichnet, daß** die Formverarbeitung der Mischung aus Cellulosefasern und Elastomer durch das teilweise Befüllen einer Form durch Spritzgießen oder Transferpressen durchgeführt wird, daraufhin durch Blähen der Mischung, und gegebenenfalls seine gleichzeitige Vernetzung im Inneren des Formwerkzeugs, um dessen vollständiges Füllen zu bewirken.

**31.** Verfahren nach Anspruch 12, **dadurch gekennzeichnet, daß** das Elastomer ein thermoplastisches Elastomer ist, das in trockener Form verwendet wird, und daß es aufweist:

a) Mischen der Cellulosefasern und des Elastomers, und
b) Formverarbeitung der Mischung mittels Strangpressen und Einbringen eines Blähmittels in die Mischung im Verlauf ihrer Formverarbeitung.

**32.** Verfahren nach Anspruch 31, **dadurch gekennzeichnet, daß** das Blähmittel Wasser oder ein Gas ist, das im Verlauf der Weichmachung der Mischung aus Cellulosefasern und Elastomer in den Extruder eingeführt wird, und das Blähen des extrudierten Produktes aufgrund des Verdampfens des Wassers oder des Gases, das es einschließt, bei seinem Austritt aus der Strangpreßform spontan stattfindet.

**33.** Verfahren nach Anspruch 31, **dadurch gekennzeichnet, daß** das Blähmittel aus einem oder mehreren Treibmitteln besteht, die im Verlauf der Zuführung von Mischung aus Cellulosefasern und Elastomer zum Extruder in dieses eingeführt wird, und das Blähen des extrudierten Produktes bei seinem Austritt aus der Strangpreßform spontan stattfindet.

**34.** Verfahren nach einem der Ansprüche 31 bis 33, **dadurch gekennzeichnet, daß** das Extrudieren bei einer zwischen 140 und 190°C liegenden Temperatur durchgeführt wird.

**35.** Schwämme, **dadurch gekennzeichnet, daß** sie ein schwammartiges Material nach einem der Ansprüche 1 bis 11 aufweisen.

**36.** Haushaltsartikel, welche ein Schwammelement wie Wisch- und Schabwerkzeuge zum Reinigen von Oberflächen aufweisen, **dadurch gekennzeichnet, daß** das Schwammelement ein schwammartiges Material nach einem der Ansprüche 1 bis 11 aufweist.